# EUROPEAN PATENT APPLICATION

(11) **EP 4 629 051 A1**
(43) Date of publication of application: **08.10.2025**
(21) Application number: 23896735.0
(22) Date of filing: 27.11.2023
(51) Int. Cl.: G06F 3/14, G06F 3/04883

(54) **INFORMATION PROMPT METHOD, INFORMATION PROMPT APPARATUS, ELECTRONIC DEVICE AND READABLE STORAGE MEDIUM**

(30) Priority: 30.11.2022 CN 202211528363
(71) Applicant: Vivo Mobile Communication Co., Ltd., Dongguan, Guangdong 523863 (CN)
(72) Inventor: JI, Wenbin, Dongguan, Guangdong 523863 (CN)
(74) Representative: Lavoix
(86) International application number: PCT/CN2023/134357
(87) International publication number: WO 2024/114584

(57) **Abstract**

This application discloses an information prompt method, an information prompt apparatus, an electronic device, and a readable storage medium, and pertains to the field of communication technologies. The method includes: receiving a first input, where the first input is used to enable a see-through function of a wearable device; and displaying target prompt information on an outer display screen of the wearable device in response to the first input, where the target prompt information is used to indicate that the see-through function of the wearable device is enabled.

## Description

### CROSS-REFERENCE TO RELATED APPLICATIONS

This application claims priority to Chinese Patent Application No. 202211528363.3, filed on November 30, 2022 and entitled "INFORMATION PROMPT METHOD, INFORMATION PROMPT APPARATUS, ELECTRONIC DEVICE, AND READABLE STORAGE MEDIUM", which is incorporated herein by reference in its entirety.

### TECHNICAL FIELD

This application pertains to the field of extended reality technologies, and specifically, relates to an information prompt method, an information prompt apparatus, an electronic device, and a readable storage medium.

### BACKGROUND

Extended reality (Extended Reality, XR) technologies include a virtual reality (VR, Virtual Reality) technology, an augmented reality (Augmented Reality, AR) technology, a mixed reality (Mixed Reality, MR) technology, and the like. In the XR technology, an environment in which reality and virtuality are combined and human-computer interaction may be performed may be generated based on a computer technology and a wearable device. Through system simulation of an interactive three-dimensional dynamic vision with multi-source information fusion and a physical behavior, a user can be immersed in a virtual environment, and experience a feeling of being in a real environment.

A head-mounted VR device is used as an example. The head-mounted VR device occludes a vision of a wearer to the outside by using a head-mounted display, to direct the wearer to have a feeling of being in a virtual environment. The wearer needs to wear the VR device on the head, and tightly attach the VR device to the face. In this case, a non-wearer around the wearer does not learn of a use status of the VR device of the wearer. In other words, the non-wearer cannot determine whether the wearer can see a person or an object in a real environment, and cannot determine whether the non-wearer is being secretly photographed. Therefore, the non-wearer faces a privacy leakage risk.

### SUMMARY

Embodiments of this application aim to provide an information prompt method, an information prompt apparatus, an electronic device, and a readable storage medium, to intuitively prompt a non-wearer around a wearer with an enabled state of a see-through function of a wearable device of the wearer, so that the non-wearer protects personal privacy.

According to a first aspect, an embodiment of this application provides an information prompt method. The method includes:
receiving a first input, where the first input is used to enable a see-through function of a wearable device; and
displaying target prompt information on an outer display screen of the wearable device in response to the first input, where the target prompt information is used to indicate that the see-through function of the wearable device is enabled.

According to a second aspect, an embodiment of this application provides an information prompt apparatus. The apparatus includes:
a receiving module, configured to receive a first input, where the first input is used to enable a see-through function of a wearable device; and
a display module, configured to display target prompt information on an outer display screen of the wearable device, where the target prompt information is used to indicate that the see-through function of the wearable device is enabled.

According to a third aspect, an embodiment of this application provides an electronic device. The electronic device includes a processor and a memory, the memory stores a program or instructions capable of being run on the processor, and when the program or instructions are executed by the processor, steps of the method according to the first aspect are implemented.

According to a fourth aspect, an embodiment of this application provides a readable storage medium. The readable storage medium stores a program or instructions, and when the program or instructions are executed by a processor, steps of the method according to the first aspect are implemented.

According to a fifth aspect, an embodiment of this application provides a chip. The chip includes a processor and a communication interface, the communication interface is coupled to the processor, and the processor is configured to run a program or instructions, to implement the method according to the first aspect.

According to a sixth aspect, an embodiment of this application provides a computer program product. The program product is stored in a storage medium, and the program product is executed by at least one processor, to implement the method according to the first aspect.

In embodiments of this application, in a case that the see-through function of the wearable device is enabled, the target prompt information is displayed on the outer display screen of the wearable device, to intuitively present that the see-through function of the wearable device is enabled, so that a non-wearer in a same real scene as the wearer of the wearable device can learn of a use status of the wearable device in a timely manner by using the outer display screen. In this way, personal privacy security of the non-wearer is ensured to the greatest extent.

### BRIEF DESCRIPTION OF DRAWINGS

FIG. 1 is a schematic flowchart of an information prompt method according to some embodiments of this application;
FIG. 2 is a schematic diagram of a display area of an information prompt method according to some embodiments of this application;
FIG. 3 is a schematic diagram of simulated display of an information prompt method according to some embodiments of this application;
FIG. 4 is a schematic diagram of simulated display of an information prompt method according to some embodiments of this application;
FIG. 5 is a schematic diagram of simulated display of an information prompt method according to some embodiments of this application;
FIG. 6 is a schematic diagram of simulated display of an information prompt method according to some embodiments of this application;
FIG. 7 is a schematic diagram of simulated display of an information prompt method according to some embodiments of this application;
FIG. 8 is a schematic diagram of simulated display of an information prompt method according to some embodiments of this application;
FIG. 9 is a schematic diagram of environment information collection of an information prompt method according to some embodiments of this application;
FIG. 10 is a schematic diagram of simulated display of an information prompt method according to some embodiments of this application;
FIG. 11 is a schematic structural diagram of an information prompt apparatus according to some embodiments of this application;
FIG. 12 is a schematic structural diagram of an electronic device according to some embodiments of this application; and
FIG. 13 is a schematic diagram of hardware of an electronic device according to some embodiments of this application.

### DESCRIPTION OF EMBODIMENTS

The following clearly describes the technical solutions in embodiments of this application with reference to the accompanying drawings in embodiments of this application. Clearly, the described embodiments are some rather than all of embodiments of this application. All other embodiments obtained by a person of ordinary skill in the art based on embodiments of this application shall fall within the protection scope of this application.

In the specification and claims of this application, the terms such as "first" and "second" are intended to distinguish between similar objects but do not necessarily indicate a specific order or sequence. It should be understood that data used in this way may be interchangeable in a proper case, so that embodiments of this application can be implemented in a sequence other than those shown or described herein. Objects distinguished by "first" and "second" are usually of one type, and a quantity of objects is not limited. For example, there may be one first objects, or may be a plurality of first objects. In addition, in the specification and claims, "and/or" represents at least one of the connected objects, and the character "/" usually represents an "or" relationship between associated objects.

With reference to the accompanying drawings, the following describes in detail an information prompt method, an information prompt apparatus, an electronic device, and a readable storage medium provided in embodiments of this application by using a specific embodiment and an application scenario thereof.

An execution body of the information prompt method provided in embodiments of this application may include but is not limited to a wearable device. A type of the wearable device may be a VR device, an AR device, an MR device, or the like. This is not specifically limited herein.

It should be noted that the wearable device is a head-mounted display device that needs to occlude a vision of the user when being used.

Usually, the wearable device is provided with an inner display screen, and the inner display screen is a display area that may be seen by a wearer of the wearable device. In embodiments, a display apparatus may be added to an exterior of the wearable device. In other words, an outer display screen is disposed on the exterior of the wearable device, and the outer display screen is a display area that may be seen by a non-wearer.

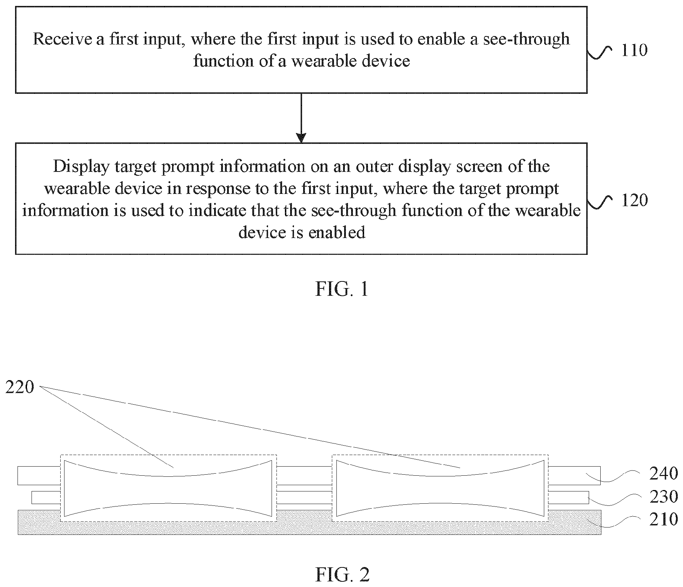

FIG. 1 is a schematic flowchart of an information prompt method according to some embodiments of this application. As shown in FIG. 1, the information prompt method includes step 110 and step 120.

Step 110: Receive a first input, where the first input is used to enable a see-through function of a wearable device.

In this embodiment of this application, the first input is used to enable the see-through function of the wearable device. The see-through function enables a user to implement behavior interaction with an external real world without removing the wearable device.

The see-through function in this application is video see-through (VST, Video See-Through). Video see-through is to capture a real-time view of a real world by using a photographing apparatus, and combine the real-time view and a computer image technology, to display the real-time view on a non-transparent display. Finally, the real-time view enters a field of view of the user.

The see-through function of the wearable device may provide a wearer with a feeling that a human eye can directly see a surrounding real world through the wearable device. Therefore, the function is referred to as "see-through".

In this step, the first input may be an input performed by a user on the wearable device, may be an input performed by a user on another electronic device connected to the wearable device, or may be an input performed by another electronic device on the wearable device.

The user may be a wearer of the wearable device, or may be a non-wearer. This is not specifically limited herein. The another electronic device may be a smartwatch, a smart band, a handle, a mobile phone, a computer, or the like.

For example, the first input includes but is not limited to a touch input performed by the user on the wearable device through a touch apparatus such as a touchscreen or a physical key, or a voice instruction entered by the user, or a specific gesture entered by the user, or a start instruction input performed by the another electronic device on the wearable device, or another feasible input. Specifically, the first input may be determined according to an actual use requirement. This is not limited in this embodiment of this application.

The touch input in this embodiment of this application includes but is not limited to: a tap input, a slide input, or a press input on the wearable device, or a touch input on another control device connected to the wearable device. The tap input may be a single-tap input, a double-tap input, an input with any quantity of taps, or the like, or may be a long-press input or a short-press input.

For example, a touchscreen of the wearable device or the connected another electronic device is provided with a target control corresponding to the see-through function, and the first input may be a tap input performed by the user on the target control. Alternatively, the wearable device or the connected another electronic device may be provided with a physical key corresponding to the see-through function or a physical key that may be used to select the see-through function, and the first input may be a press input performed by the user on the physical key.

The voice instruction in this embodiment of this application includes but is not limited to: the wearable device triggers the see-through function of the wearable device when receiving a voice such as "Enable see-through" or "Turn on see-through".

The specific gesture in this embodiment of this application includes but is not limited to any one of a single-tap gesture, a slide gesture, a drag gesture, a pressure recognition gesture, a long-press gesture, an area change gesture, a double-press gesture, or a double-tap gesture. The specific gesture may correspond to the see-through function. For example, the first input may be that the wearable device enables the see-through function when detecting the specific gesture of the user.

The start instruction input by the another electronic device on the wearable device in this embodiment of this application may be that the another electronic device is provided with the start instruction, and the wearable device may be directly triggered to enable the see-through function. For example, the first input may be that the electronic device is provided with a timed start instruction, and when a specified moment arrives, the electronic device automatically sends the start instruction to the wearable device, and the wearable device starts the see-through function after receiving the start instruction.

Certainly, in another embodiment, the first input may also be in another form, including but not limited to a character input, a fingerprint input, or an iris input. Specifically, the first input may be determined according to an actual requirement. This is not limited in this embodiment of this application.

In some embodiments, the see-through function may be completed by enabling a photographing function of the wearable device, and the photographing function may be enabled by using a camera disposed on an outer display screen of the wearable device.

After the see-through function of the wearable device is enabled, the wearer of the wearable device may directly see a person and an object in a real environment, may photograph an image or record a video in the real environment, and may even collect face information. The wearer may photograph at will, by using the wearable device, a person or an object that enters a lens, and another surrounding non-wearer may be secretly photographed without knowledge. In this process, a greater privacy leakage risk lies in that a photographed image or face recognition information is uploaded to a server corresponding to the wearable device, and information about the non-wearer may be used at will. It may be understood that after the see-through function of the wearable device is disabled, the wearer can only see content displayed on the inner display screen.

It may be understood that the see-through function of the wearable device may be associated with the camera on the outer display screen. To be specific, whether the camera on the outer display screen is in an enabled state can be monitored in real time. If the camera on the outer display screen is enabled, it is determined that the see-through function of the wearable device is enabled; or if the camera on the outer display screen is disabled or sleeps, it is determined that the see-through function of the wearable device is disabled.

The see-through function is to collect a real-time view of a surrounding environment by using the camera and display the real-time view on a screen, to provide a person with a feeling that a human eye can directly see a surrounding real world through a head-mounted display, and therefore, is referred to as a "see-through" function.

Step 120: Display target prompt information on the outer display screen of the wearable device in response to the first input, where the target prompt information is used to indicate that the see-through function of the wearable device is enabled.

In this embodiment of this application, because the wearable device is provided with the outer display screen, another user may determine a working status of the wearable device based on the target prompt information displayed on the outer display screen.

FIG. 2 is a schematic diagram of a display area of an information prompt method according to some embodiments of this application.

As shown in FIG. 2, the wearable device may include an outer display screen 210, an inner display screen 220, and a fastening structure 240.

The outer display screen 210 may be an outer screen display area that displays content to the non-wearer, and the inner display screen 220 may be an inner screen display area that displays content to the wearer. The fastening structure is used to fixedly connect the outer display screen 210 and the inner display screen 220.

In actual execution, after the wearable device is started, the wearable device may detect, in real time, whether the see-through function is in an enabled state. After the first input is received, if it is determined that the see-through function is in the enabled state, enabled state information may be transferred to the outer display screen of the wearable device in response to the first input, and then, the target prompt information used to indicate that the see-through function is enabled may be displayed on the outer display screen.

If it is determined that the see-through function is in a disabled state, the outer display screen may close content display interface, or display a blank image, or display text information "A see-through function is disabled". This is not specifically limited herein.

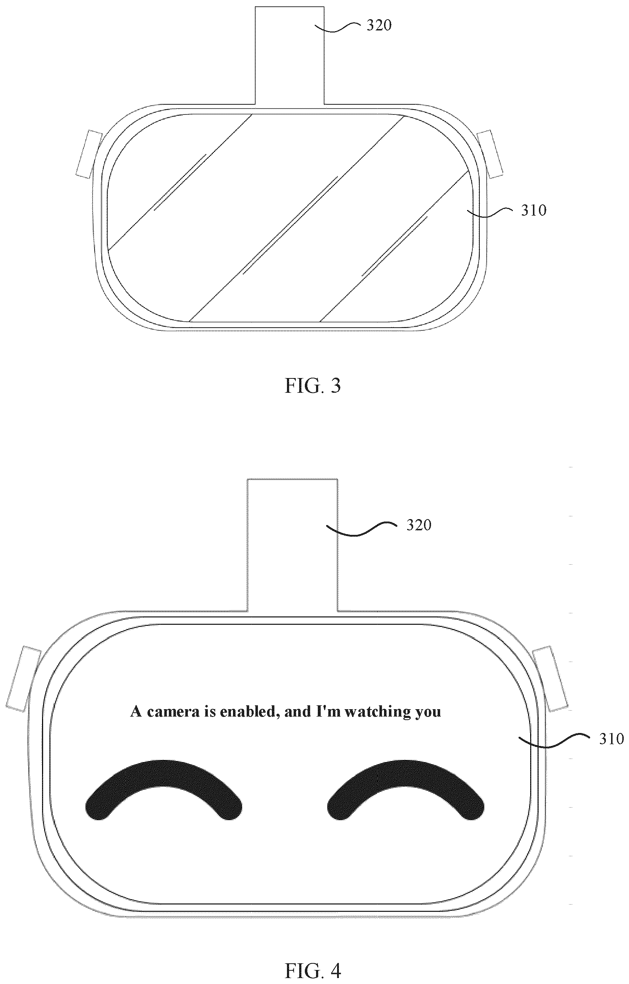

As shown in FIG. 3, the wearable device includes an outer display screen 310 and a head fastening apparatus 320. The head fastening apparatus 320 is configured to fasten the wearable device to the head of the wearer. The head fastening apparatus 320 may include a lateral headband connected to both lateral ends of the outer display screen 310 and a longitudinal headband connecting an upper part of the outer display screen 310 and the lateral headband. The head fastening apparatus 320 in FIG. 3 is merely used as an example. A structure is not specifically limited in this application.

In a case that the see-through function of the wearable device is disabled, the target prompt information is not displayed or the blank image is displayed on the outer display screen 310.

When the wearer of the wearable device is in a public environment, the non-wearer may learn, in a timely manner based on the target prompt information displayed on the outer display screen of the wearable device, of whether the see-through function of the wearable device is enabled.

For example, the wearer experiences a VR device in a shopping mall. When the wearer enables a see-through function of the VR device, the target prompt information is displayed on the outer display screen of the VR device. Then, when another person passes around the wearer, the another person may immediately learn whether the wearer is using the see-through function of the VR device. The another person may choose to stay away from the wearer to prevent the another person from being secretly photographed.

In the information prompt method in this embodiment of this application, in a case that the see-through function of the wearable device is enabled, the target prompt information is displayed on the outer display screen of the wearable device, to intuitively present that the see-through function of the wearable device is enabled, so that a non-wearer in a same real scene as the wearer of the wearable device learns of a use status of the wearable device in a timely manner by using the outer display screen. In this way, privacy security of the non-wearer is ensured to the greatest extent.

In some embodiments, the target prompt information includes at least one of the following:
text prompt information;
a partial face image or a complete face image of a virtual object;
a face image of a wearer of the wearable device, where the face image includes a partial face image or a complete face image of the wearer; and
a scene image, where the scene image is a two-dimensional scene image or a three-dimensional scene image of a real scene in which the wearable device is located.

It may be understood that the target prompt information may be a combination of the at least one type of information. For example, the target prompt information may be combination information of the text prompt information and the face image of the virtual object, or combination information of the text prompt information and the face image of the wearer of the wearable device, or combination information of the text prompt information and the scene image.

At least two types of information may be spliced and combined based on an image processing technology. A combination of excessive information may affect a prompt effect of the target prompt information. Usually, one type of target prompt information or target prompt information obtained by combining two types of information may be used.

As shown in FIG. 4, in a case that the see-through function of the wearable device is enabled, both the text prompt information and the partial face image of the virtual object are displayed on the outer display screen of the wearable device.

In a case that the target prompt information includes the text prompt information, the text prompt information may be preset text information that represents a meaning of "A see-through function is enabled". In other words, the non-wearer may directly obtain a prompt of "A see-through function is enabled" based on the text prompt information.

It may be understood that the preset text information may be text information that is set by default. For example, the default text information may be "A see-through function is enabled". The default text information may alternatively be personalized text information that is set according to a user requirement. For example, the text prompt information may be set to "A camera is enabled, and I'm watching you" or "A camera is enabled, and a surrounding environment is being scanned". The default text information may alternatively be other text information that may represent that the see-through function is enabled. The default text information is not specifically limited herein.

A text display form of the text prompt information is not specifically limited either in this embodiment of this application.

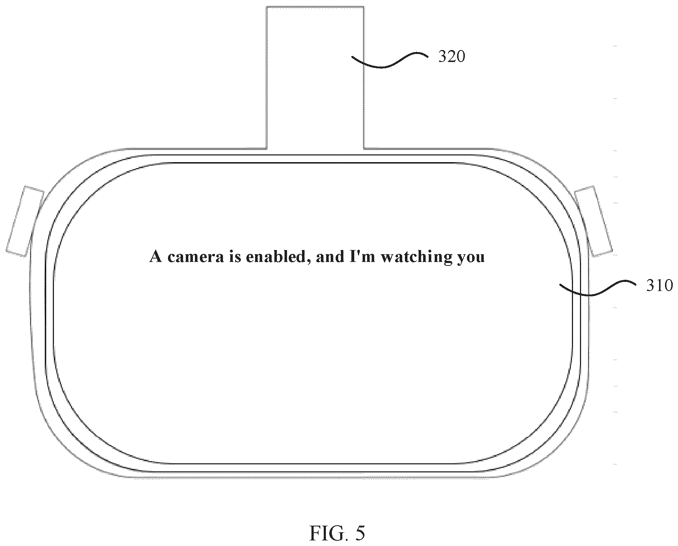

As shown in FIG. 5, in a case that the see-through function of the wearable device is enabled, the text prompt information "A camera is enabled, and I'm watching you" is displayed on the outer display screen of the wearable device.

In a case that the target prompt information includes a preset identifier image, the preset identifier image may be a preset image with a specific meaning, and the image with a specific meaning may be an identifier image used to represent that the see-through function is enabled.

For example, the preset identifier image may be a "camera" identifier image to indicate that the see-through function is enabled, or an "open" identifier image to indicate that the see-through function is enabled, for example, an identifier "√". If the see-through function of the wearable device is disabled, the preset identifier image may be an "off" identifier image, for example, an identifier "×".

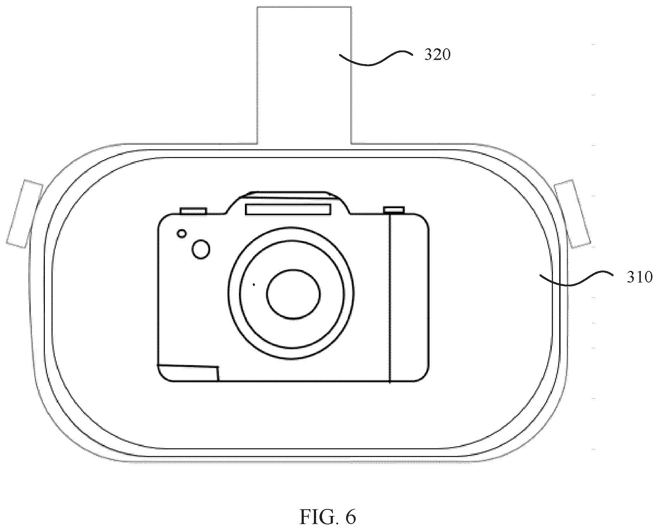

As shown in FIG. 6, in a case that the see-through function of the wearable device is enabled, the "camera" identifier image is displayed on the outer display screen of the wearable device.

In a case that the target prompt information includes the face image of the wearer of the wearable device, the face image of the wearer may include the partial face image or the complete face image of the wearer. The partial face image of the wearer is a face image including at least one face part of the wearer, and the complete face image of the wearer is a face image including all face parts of the wearer. For example, the partial face image of the wearer may be an eye image, a mouth image, a side face image of the wearer, or the like, and the complete face image is a full face image including five sense organs of the wearer.

The face image of the wearer may be an image generated based on a facial feature of the wearer. As shown in FIG. 2, the wearable device may further include a face tracking sensor 230. The face tracking sensor 230 may include a camera group, an infrared light apparatus, or a structured light apparatus, and is configured to collect facial feature data.

In actual execution, the camera group may be configured to: track the face of the wearer, collect and locate a feature point in each part of the face, and may further collect face color information and face shadow information. The infrared light apparatus may collect a face infrared image, and the structured light apparatus may collect a face depth image. Data collected by the camera group, the infrared light apparatus, or the structured light apparatus jointly form the facial feature data.

A graphics processing unit (Graphics Processing Unit, GPU) in the wearable device may process the facial feature data collected by the face tracking sensor 230, to generate the partial face image or the complete face image of the wearer.

The GPU may further perform real-time rendering and reconstruction on the facial feature data, to obtain a face image including expression action information, so that the face image that is of the wearer and that is displayed on the outer display screen is more vivid.

In actual execution, in a case that the outer display screen of the wearable device displays the face image of the wearer, another non-wearer may directly see the face image of the wearer, and may learn that the see-through function of the wearable device is enabled.

In a case that the target prompt information includes the partial face image or the complete face image of the virtual object, the virtual object may be a three-dimensional virtual character, a two-dimensional virtual character, a three-dimensional virtual animal, or a two-dimensional virtual animal. This is not specifically limited herein.

Therefore, the partial face image or the complete face image of the virtual object may be a two-dimensional face image or a three-dimensional face image. For example, the virtual object may be a cartoon character, a virtual digital person, or a fictional role.

It should be noted that the partial face image or the complete face image of the virtual object may be a face image of a fictional person or animal, or may be a face image generated based on the facial feature data in the foregoing embodiment. In other words, the partial face image or the complete face image of the virtual object may be obtained through conversion based on the facial feature data of the wearer, and facial feature data of the virtual object corresponds to the facial feature data of the wearer.

The partial face image of the virtual object is a face image including at least one face part of the virtual object, and the complete face image is a face image including all face parts of the virtual object.

"See-through" originally means "line of sight penetration", and the partial face image of the virtual object may include at least an eye, so that it is easier for the non-wearer to understand a meaning of the target prompt information.

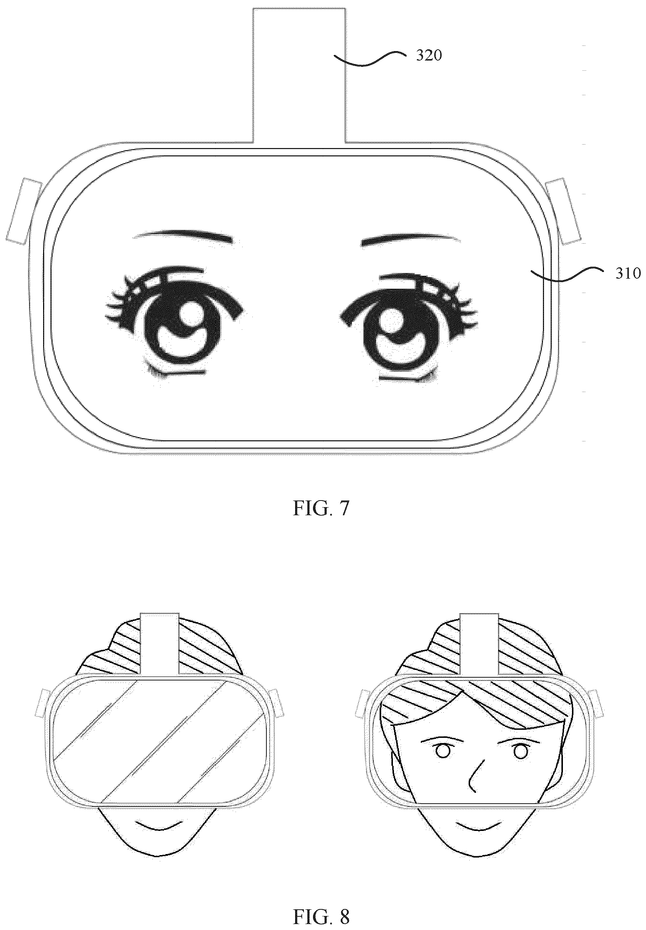

As shown in FIG. 7, in a case that the see-through function of the wearable device is enabled, an eye image of the two-dimensional virtual figure is displayed on the outer display screen of the wearable device, and the two-dimensional virtual figure is a fictional figure.

In some embodiments, in a case that the target prompt information includes the partial face image of the wearer of the wearable device, a facial feature point in the partial face image matches a facial feature point in a target face area of the wearer;
a face outer contour in the partial face image is the same as a face outer contour of the target face area of the wearer; and
the target face area is a face area in which a face of the wearer is obstructed by the outer display screen of the wearable device.

In a process of actually using the wearable device, the wearer wears the wearable device on the head, and the outer display screen of the wearable device partially obstructs the face of the wearer.

To improve visual experience of the non-wearer, the partial face image of the wearer may be displayed on the outer display screen based on the face area in which the face of the wearer is obstructed by the outer display screen of the wearable device.

In this embodiment of this application, the partial face image is a face image corresponding to the target face area, and the target face area is the face area in which the face of the wearer is obstructed by the outer display screen of the wearable device.

In actual execution, the partial face image of the wearer meets the following conditions:
the facial feature point in the partial face image matches the facial feature point in a target face area of the wearer; and the face outer contour in the partial face image is the same as the face outer contour of the target face area of the wearer.

It may be understood that matching between facial feature points indicates that a face part included in the partial face image corresponds to a face part in the target face area and positions at which the parts are located correspond to each other. On this basis, the face outer contour in the partial face image is also the same as the face outer contour of the target face area of the wearer. In this case, the partial face image that is of the wearer and that is presented on the outer display screen may be completely consistent with the face image corresponding to the target face area.

From a perspective of the non-wearer, a combination of the partial face image of the wearer and an unobstructed face area may provide the non-wearer with visual experience of a complete face.

As shown in a left diagram in FIG. 8, the face part included in the target face area includes eyes, a nose, and an ear. As shown in a right diagram in FIG. 8, the face part in the partial face image displayed on the outer display screen includes eyes, a nose, and an ear. That is, the facial feature point in the partial face image matches the facial feature point in the target face area of the wearer. In addition, the face outer contour in the target face area is the same as the face outer contour in the partial face image. In the right diagram in FIG. 8, a smooth and complete face may be seen by combining the partial face image of the wearer and the unobstructed face area.

In the information prompt method provided in this embodiment of this application, an outer contour and a facial feature point of the partial face image and an outer contour and a facial feature point of the target face area are matched, to improve a display effect of the target prompt information, so that a face seen by the non-wearer is more realistic.

In a case that the target prompt information includes the scene image, the scene image is a two-dimensional scene image or a three-dimensional scene image of the real scene in which the wearable device is located. The real scene is a real environment in which the wearable device is located.

In a case that the see-through function of the wearable device is enabled, the two-dimensional scene image or the three-dimensional scene image may be generated based on the real scene.

In a case that the scene image is displayed on the outer display screen of the wearable device, the non-wearer may directly see a real environment the same as that in a perspective of the wearer of the wearable device. The scene image may include all persons or objects in the real environment. The wearer may learn, based on the scene image, that the see-through function of the wearable device is enabled.

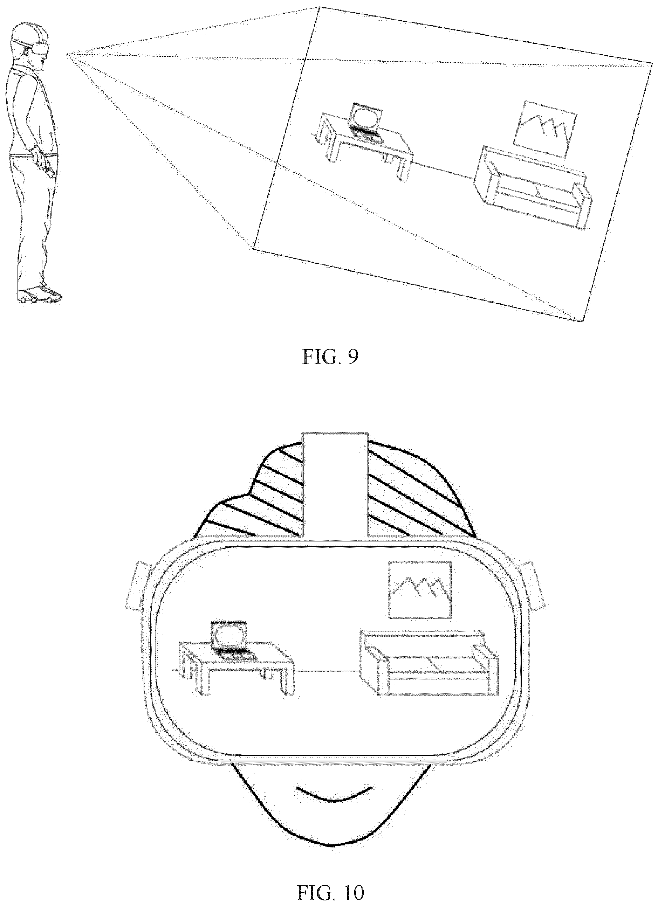

FIG. 9 shows a real scene in which a wearable device is located and that is seen by a wearer. As shown in FIG. 10, the two-dimensional scene image of the real scene is displayed on the outer display screen of the wearable device.

In the information prompt method provided in this embodiment of this application, different target display information is displayed on the outer display screen, so that the non-wearer can simply and clearly obtain a prompt that the see-through function is enabled, and in a case that a prompt effect is ensured, specific visual experience can be further ensured.

In some embodiments, in a case that the target prompt information includes the face image of the wearer of the wearable device, the displaying target prompt information on an outer display screen of the wearable device includes:
updating the face image in a case that it is detected that expression action information of the wearer changes.

It should be noted that, to improve a visual display effect of the target display information, an information display manner of the target prompt information may be static display or dynamic display.

Static display means that statically displayed content remains unchanged in a case that content displayed in the target prompt information remains unchanged when the see-through function is enabled. For example, when the see-through function of the wearable device is enabled, the face image of the wearer is generated, and is displayed on the outer display screen of the wearable device. The image content may remain unchanged.

In this embodiment of this application, dynamic display means that for the face image of the wearer or the face image of the virtual object that is generated based on the facial feature data of the wearer, the displayed face image may be dynamically updated in real time based on a change in expression action information of a face, to display current expression action information of the wearer in real time, so that another surrounding non-wearer can learn of a current real emotion state of the wearer, thereby improving a sense of reality of the target prompt information.

In some embodiments, dynamic display may alternatively be that an animation effect such as a flicker effect or a scrolling display effect is set for the text prompt information in a case that the see-through function is enabled, or a natural blink effect is set for the eye image or an open/close effect is set for the mouth image when the face image of the two-dimensional virtual person is displayed. This is not specifically limited herein. Processing of the dynamic effect may be completed by using a GPU.

In actual execution, in a case that it is detected that the expression action information of the wearer changes, different face images may be generated in real time, so that a plurality of frames of continuously collected statically displayed face images may be obtained. Then, a plurality of frames of continuous face images may be played on the outer display screen. In other words, a face image whose expression action information dynamically changes may be seen.

In the information prompt method provided in this embodiment of this application, in a case that it is detected that the expression action information of the wearer changes, the face image is dynamically updated on the outer display screen, so that the face image can be updated in real time based on a change in a face expression, the target display information is close to a real face expression, and a display effect is more realistic.

In some embodiments, before the updating the face image in a case that it is detected that expression action information of the wearer changes, the information prompt method further includes:
collecting a facial feature point of the wearer; and
in a case that it is detected that positions of at least some facial feature points of the wearer change, determining that the expression action information of the wearer changes.

In actual execution, the wearable device may collect the facial feature point of the wearer in real time by using a face tracker, to implement tracking on the facial feature point of the wearer.

It may be understood that, the wearable device may determine a position of a facial feature point in each frame of image in a plurality of frames of continuous face images that are generated in real time, and compare positions of a same feature point in different frames of face images, to determine whether the position of the facial feature point changes.

In a case that it is detected that the positions of the at least some facial feature points of the wearer change, it indicates that an action form of at least one part of the face of the wearer changes, so that it can be determined that the expression action information of the wearer changes. For example, when it is detected that a position of an eye feature point of the wearer changes, it may be determined that the expression action information of the wearer changes. A display effect of the face image displayed on the outer display screen is that the wearer changes from looking left to looking right.

In the information prompt method provided in this embodiment of this application, the facial feature point of the wearer is collected for detection, so that whether the expression action information of the wearer changes can be detected in real time, and the face image is updated in real time in a case that an expression action changes.

In some embodiments, in a case that the target prompt information includes the scene image, before the displaying target prompt information on an outer display screen of the wearable device, the information prompt method further includes:
collecting scene information of the real scene in which the wearable device is located;
   and
generating the two-dimensional scene image or the three-dimensional scene image of the real scene based on the scene information; and
the displaying target prompt information on an outer display screen of the wearable device includes:
   displaying the two-dimensional scene image or the three-dimensional scene image on the outer display screen of the wearable device.

In actual execution, scene information of the real scene in which the wearable device is located may be directly photographed by using a camera of the wearable device, to generate the two-dimensional scene image.

The wearer may see a photographing preview interface of the real scene through the inner display screen, and the wearer may directly see the scene information of the real scene. The non-wearer may see a photographing preview image corresponding to the two-dimensional scene image through the outer display screen, so that the non-wearer may learn that the see-through function of the wearable device is enabled.

It may be understood that the wearer may walk at will in the real scene, and the scene information that is of the real scene in which the wearable device is located and that is collected by the wearable device dynamically changes. Therefore, the real scene may be continuously photographed, to generate continuous two-dimensional scene images, and the continuous two-dimensional scene images are continuously displayed on the outer display screen, to update a two-dimensional scene image in a current perspective of the wearer in a timely manner.

In actual execution, the wearer may photograph, at different positions and at different angles, the two-dimensional scene image of the real scene in which the wearable device is located, to obtain a two-dimensional scene image sequence of the real scene.

The GPU may perform feature point extraction and feature point matching on the two-dimensional scene image sequence, and perform three-dimensional reconstruction of the scene image based on a structure from motion (Structure From Motion, SFM) algorithm or a shape from silhouette (Shape From Silhouette, SFS) algorithm, to obtain the three-dimensional scene image of the real scene, and display the three-dimensional scene image on the outer display screen.

As shown in FIG. 9, the wearer enables the see-through function of the wearable device, and photographs a directly opposite real scene, to obtain scene information of the real environment in which the wearable device is located, and send the scene information to the GPU. The GPU reconstructs the three-dimensional image based on real environment information, to generate the three-dimensional scene image.

In the information prompt method provided in this embodiment of this application, the scene information of the real scene in which the wearable device is located is collected, to generate the two-dimensional scene image or the three-dimensional scene image of the real scene, and the two-dimensional scene image or the three-dimensional scene image is displayed on the outer display screen of the wearable device, to prompt a case that the see-through function of the wearable device is enabled, so that the non-wearer obtains the target prompt information in a timely manner, to help the non-wearer protect privacy.

The information prompt method provided in this embodiment of this application may be performed by an information prompt apparatus. In embodiments of this application, a method in which an information prompt apparatus performs content display is used as an example to describe the information prompt apparatus provided in embodiments of this application.

An embodiment of this application further provides an information prompt apparatus.

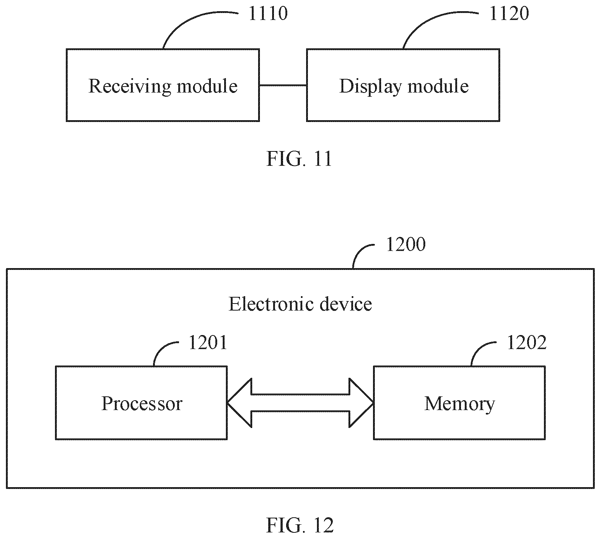

FIG. 11 is a schematic structural diagram of an information prompt apparatus according to some embodiments of this application. As shown in FIG. 11, the information prompt apparatus includes a receiving module 1110 and a display module 1120.

The receiving module 1110 is configured to receive a first input. The first input is used to enable a see-through function of a wearable device.

The display module 1120 is configured to display target prompt information on an outer display screen of the wearable device. The target prompt information is used to indicate that the see-through function of the wearable device is enabled.

According to the information prompt apparatus provided in this embodiment of this application, in a case that the see-through function of the wearable device is enabled, the target prompt information is displayed on the outer display screen of the wearable device, to intuitively present that the see-through function of the wearable device is enabled, so that a non-wearer in a same real scene as the wearer of the wearable device learns of a use status of the wearable device in a timely manner by using the outer display screen. In this way, privacy security of the non-wearer is ensured to the greatest extent.

In some embodiments, the target prompt information includes at least one of the following:
text prompt information;
a partial face image or a complete face image of a virtual object;
a face image of a wearer of the wearable device, where the face image includes a partial face image or a complete face image of the wearer; and
a scene image, where the scene image is a two-dimensional scene image or a three-dimensional scene image of a real scene in which the wearable device is located.

In some embodiments, in a case that the target prompt information includes the partial face image of the wearer of the wearable device, a facial feature point in the partial face image matches a facial feature point in a target face area of the wearer;
a face outer contour in the partial face image is the same as a face outer contour of the target face area of the wearer; and
the target face area is a face area in which a face of the wearer is obstructed by the outer display screen of the wearable device.

In some embodiments, in a case that the target prompt information includes the face image of the wearer of the wearable device, the display module 1120 is further configured to:
update the face image in a case that it is detected that expression action information of the wearer changes.

In some embodiments, the apparatus further includes:
a first collection module, configured to collect a facial feature point of the wearer; and
a first processing module, configured to: in a case that it is detected that positions of at least some facial feature points of the wearer change, determine that the expression action information of the wearer changes.

In some embodiments, in a case that the target prompt information includes the scene image, the apparatus further includes:
a second collection module, configured to collect scene information of the real scene in which the wearable device is located; and
a second processing module, configured to generate the two-dimensional scene image or the three-dimensional scene image of the real scene based on the scene information; and
the display module 1120 is further configured to:
   display the two-dimensional scene image or the three-dimensional scene image on the outer display screen of the wearable device.

The information prompt apparatus in this embodiment of this application may be an electronic device, or may be a component in the electronic device, for example, an integrated circuit or a chip. The electronic device may be a terminal, or may be a device other than the terminal. For example, the electronic device may be a mobile phone, a tablet computer, a notebook computer, a palmtop computer, a vehicle-mounted electronic device, a mobile Internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook or a personal digital assistant (personal digital assistant, PDA), or the like; or may be a server, a network attached storage (Network Attached Storage, NAS), a personal computer (personal computer, PC), a television (television, TV), a teller machine, a self-service machine, or the like. This is not specifically limited in this embodiment of this application.

The information prompt apparatus in this embodiment of this application may be an apparatus with an operating system. The operating system may be an Android (Android) operating system, may be an iOS operating system, or may be another possible operating system. This is not specifically limited in this embodiment of this application.

The information prompt apparatus provided in this embodiment of this application can implement processes implemented in the method embodiments in FIG. 1 to FIG. 10. To avoid repetition, details are not described herein again.

Optionally, as shown in FIG. 12, an embodiment of this application further provides an electronic device 1200, including a processor 1201 and a memory 1202. A program or instructions are stored in the memory 1202 and may be run on the processor 1201. When the program or instructions are executed by the processor 1201, processes in the embodiment of the information prompt method are implemented, and a same technical effect can be achieved. To avoid repetition, details are not described herein again.

It should be noted that the electronic device in this embodiment of this application includes a mobile electronic device and a non-mobile electronic device.

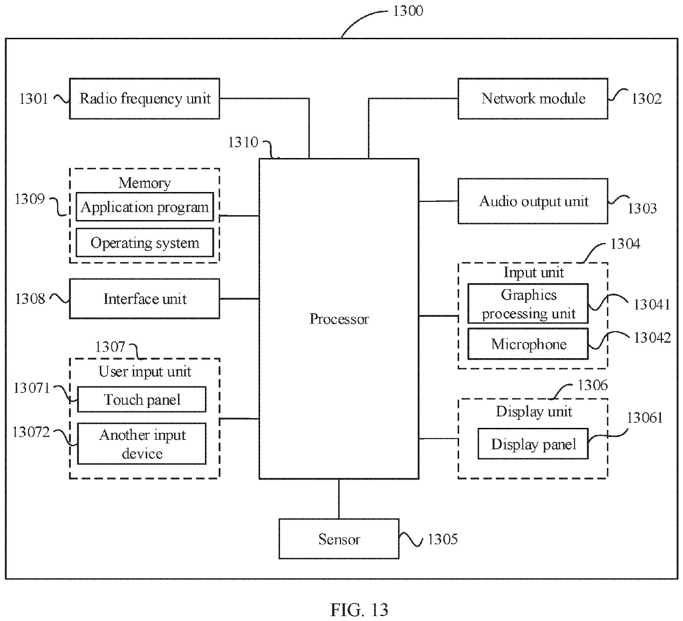

FIG. 13 is a schematic structural diagram of hardware of an electronic device according to an embodiment of this application.

The electronic device 1300 includes but is not limited to components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

A person skilled in the art may understand that the electronic device 1300 may further include a power supply (for example, a battery) that supplies power to each component, and the power supply may be logically connected to the processor 1310 by using a power management system, to implement functions such as charging management, discharging management, and power consumption management by using the power management system. A structure of the electronic device shown in FIG. 13 constitutes no limitation on the electronic device. The electronic device may include more or fewer components than those shown in the figure, or combine some components, or have different component arrangements. Details are not described herein again.

The user input unit 1307 is configured to receive a first input. The first input is used to enable a see-through function of a wearable device.

The processor 1310 is configured to display target prompt information on an outer display screen of the wearable device in response to the first input. The target prompt information is used to indicate that the see-through function of the wearable device is enabled.

According to the electronic device provided in this embodiment of this application, in a case that the see-through function of the wearable device is enabled, the target prompt information is displayed on the outer display screen of the wearable device, to intuitively present that the see-through function of the wearable device is enabled, so that a non-wearer in a same real scene as the wearer of the wearable device learns of a use status of the wearable device in a timely manner by using the outer display screen. In this way, privacy security of the non-wearer is ensured to the greatest extent.

Optionally, the target prompt information includes at least one of the following:
text prompt information;
a partial face image or a complete face image of a virtual object;
a face image of a wearer of the wearable device, where the face image includes a partial face image or a complete face image of the wearer; and
a scene image, where the scene image is a two-dimensional scene image or a three-dimensional scene image of a real scene in which the wearable device is located.

Optionally, in a case that the target prompt information includes the partial face image of the wearer of the wearable device, a facial feature point in the partial face image matches a facial feature point in a target face area of the wearer;
a face outer contour in the partial face image is the same as a face outer contour of the target face area of the wearer; and
the target face area is a face area in which a face of the wearer is obstructed by the outer display screen of the wearable device.

Optionally, the processor 1310 is further configured to update the face image in a case that it is detected that expression action information of the wearer changes.

Optionally, the processor 1310 is further configured to collect a facial feature point of the wearer; and
in a case that it is detected that positions of at least some facial feature points of the wearer change, determining that the expression action information of the wearer changes.

Optionally, the processor 1310 is further configured to: collect scene information of the real scene in which the wearable device is located; and
generate the two-dimensional scene image or the three-dimensional scene image of the real scene based on the scene information; and
the displaying target prompt information on an outer display screen of the wearable device includes:
   displaying the two-dimensional scene image or the three-dimensional scene image on the outer display screen of the wearable device.

It should be understood that in this embodiment of this application, the input unit 1304 may include a graphics processing unit (Graphics Processing Unit, GPU) 13041 and a microphone 13042, and the graphics processing unit 13041 processes image data of a still picture or a video obtained by an image capture apparatus (for example, a camera) in a video capture mode or an image capture mode. The display unit 1306 may include a display panel 13061, and the display panel 13061 may be configured in a form of a liquid crystal display, an organic light-emitting diode, or the like. The user input unit 1307 includes at least one of a touch panel 13071 or another input device 13072. The touch panel 13071 is also referred to as a touchscreen. The touch panel 13071 may include two parts: a touch detection apparatus and a touch controller. The another input device 13072 may include but is not limited to a physical keyboard, a function key (for example, a volume control key or an on/off key), a trackball, a mouse, and a joystick. Details are not described herein again.

The memory 1309 may be configured to store a software program and various types of data. The memory 1309 may mainly include a first storage area for storing a program or instructions and a second storage area for storing data. The first storage area may store an operating system, an application program or instructions required by at least one function (for example, a sound playing function or an image playing function), and the like. In addition, the memory 1309 may include a volatile memory or a nonvolatile memory, or the memory 1309 may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1309 in this embodiment of this application includes but is not limited to these and any other memories of proper types.

The processor 1310 may include one or more processing units. Optionally, the processor 1310 integrates an application processor and a modem processor. The application processor mainly processes operations related to an operating system, a user interface, an application program, and the like. The modem processor mainly processes a wireless communication signal, for example, a baseband processor. It may be understood that the modem processor may not be integrated into the processor 1310.

An embodiment of this application further provides a readable storage medium. The readable storage medium stores a program or instructions. When the program or instructions are executed by a processor, processes in the embodiment of the information prompt method are implemented, and a same technical effect can be achieved. To avoid repetition, details are not described herein again.

The processor is a processor in the electronic device in the foregoing embodiment. The readable storage medium includes a computer-readable storage medium, for example, a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or instructions, to implement processes in the embodiment of the information prompt method, and a same technical effect can be achieved. To avoid repetition, details are not described herein again.

It should be understood that the chip mentioned in this embodiment of this application may also be referred to as a system on chip, a system chip, a chip system, a system-on-a-chip, or the like.

It should be noted that, in this specification, the terms "include", "comprise", or any other variant thereof are intended to cover a non-exclusive inclusion, so that a process, a method, an article, or an apparatus that includes a list of elements not only includes those elements but also includes other elements which are not expressly listed, or further includes elements inherent to such a process, a method, an article, or an apparatus. Without more constraints, an element preceded by "includes a ..." does not preclude the existence of additional identical elements in the process, method, article, or apparatus that includes the element. In addition, it should be noted that a scope of the method and apparatus in implementations of this application is not limited to performing a function in a shown or discussed sequence, and may further include performing a function in a basically simultaneous manner or in a reverse sequence based on the involved function. For example, the described method may be performed in a different order, and various steps may be added, omitted, or combined. In addition, features described with reference to some examples may be combined in another example.

From the foregoing descriptions of the implementations, a person skilled in the art may clearly understand that the method in the foregoing embodiments may be implemented by using software and a necessary universal hardware platform, or certainly may be implemented by using hardware. However, in many cases, the former is a better implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, or a network device) to perform the methods described in embodiments of this application.

The foregoing describes embodiments of this application with reference to the accompanying drawings, but this application is not limited to the foregoing specific implementations. The foregoing specific implementations are merely examples, but do not impose a limitation. Inspired by this application, a person of ordinary skill in the art may further make many forms without departing from the purposes of this application and the protection scope of the claims, and these forms all fall within the protection scope of this application.

## Claims

1. An information prompt method, comprising:
receiving a first input, wherein the first input is used to enable a see-through function of a wearable device; and
displaying target prompt information on an outer display screen of the wearable device in response to the first input, wherein the target prompt information is used to indicate that the see-through function of the wearable device is enabled.

2. The information prompt method according to claim 1, wherein the target prompt information comprises at least one of the following:
text prompt information;
a partial face image or a complete face image of a virtual object;
a face image of a wearer of the wearable device, wherein the face image comprises a partial face image or a complete face image of the wearer; and
a scene image, wherein the scene image is a two-dimensional scene image or a three-dimensional scene image of a real scene in which the wearable device is located.

3. The information prompt method according to claim 2, wherein in a case that the target prompt information comprises the partial face image of the wearer of the wearable device, a facial feature point in the partial face image matches a facial feature point in a target face area of the wearer;
a face outer contour in the partial face image is the same as a face outer contour of the target face area of the wearer; and
the target face area is a face area in which a face of the wearer is obstructed by the outer display screen of the wearable device.

4. The information prompt method according to claim 2, wherein in a case that the target prompt information comprises the face image of the wearer of the wearable device, the displaying target prompt information on an outer display screen of the wearable device comprises:
updating the face image in a case that it is detected that expression action information of the wearer changes.

5. The information prompt method according to claim 4, wherein before the updating the face image in a case that it is detected that expression action information of the wearer changes, the method further comprises:
collecting a facial feature point of the wearer; and
in a case that it is detected that positions of at least some facial feature points of the wearer change, determining that the expression action information of the wearer changes.

6. The information prompt method according to claim 2, wherein in a case that the target prompt information comprises the scene image, before the displaying target prompt information on an outer display screen of the wearable device, the method further comprises:
collecting scene information of the real scene in which the wearable device is located; and
generating the two-dimensional scene image or the three-dimensional scene image of the real scene based on the scene information; and
the displaying target prompt information on an outer display screen of the wearable device comprises:
displaying the two-dimensional scene image or the three-dimensional scene image on the outer display screen of the wearable device.

7. An information prompt apparatus, comprising:
a receiving module, configured to receive a first input, wherein the first input is used to enable a see-through function of a wearable device; and
a display module, configured to display target prompt information on an outer display screen of the wearable device, wherein the target prompt information is used to indicate that the see-through function of the wearable device is enabled.

8. The information prompt apparatus according to claim 7, wherein the target prompt information comprises at least one of the following:
text prompt information;
a partial face image or a complete face image of a virtual object;
a face image of a wearer of the wearable device, wherein the face image comprises a partial face image or a complete face image of the wearer; and
a scene image, wherein the scene image is a two-dimensional scene image or a three-dimensional scene image of a real scene in which the wearable device is located.

9. The information prompt apparatus according to claim 8, wherein in a case that the target prompt information comprises the partial face image of the wearer of the wearable device, a facial feature point in the partial face image matches a facial feature point in a target face area of the wearer;
a face outer contour in the partial face image is the same as a face outer contour of the target face area of the wearer; and
the target face area is a face area in which a face of the wearer is obstructed by the outer display screen of the wearable device.

10. The information prompt apparatus according to claim 8, wherein in a case that the target prompt information comprises the face image of the wearer of the wearable device, the display module is further configured to:
update the face image in a case that it is detected that expression action information of the wearer changes.

11. The information prompt apparatus according to claim 10, wherein the apparatus further comprises:
a first collection module, configured to collect a facial feature point of the wearer; and
a first processing module, configured to: in a case that it is detected that positions of at least some facial feature points of the wearer change, determine that the expression action information of the wearer changes.

12. The information prompt apparatus according to claim 8, wherein in a case that the target prompt information comprises the scene image, the apparatus further comprises:
a second collection module, configured to collect scene information of the real scene in which the wearable device is located; and
a second processing module, configured to generate the two-dimensional scene image or the three-dimensional scene image of the real scene based on the scene information; and
the display module is further configured to:
display the two-dimensional scene image or the three-dimensional scene image on the outer display screen of the wearable device.

13. An electronic device, comprising a processor and a memory, wherein the memory stores a program or instructions capable of being run on the processor, and when the program or instructions are executed by the processor, steps of the information prompt method according to any one of claims 1 to 6 are implemented.

14. A readable storage medium, wherein the readable storage medium stores a program or instructions, and when the program or instructions are executed by a processor, steps of the information prompt method according to any one of claims 1 to 6 are implemented.

15. A chip, comprising a processor and a communication interface, wherein the communication interface is coupled to the processor, and the processor is configured to run a program or instructions, to implement the information prompt method according to any one of claims 1 to 6.

16. A computer program product, stored in a non-transient storage medium, wherein the program product is executed by at least one processor, to implement the information prompt method according to any one of claims 1 to 6.
